# EUROPÄISCHE PATENTSCHRIFT

(11) **EP 0 985 709 B1**
(45) Veröffentlichungstag und Bekanntmachung des Hinweises auf die Patenterteilung: **24.11.2004**
(21) Anmeldenummer: 99116401.3
(22) Anmeldetag: 20.08.1999
(51) Int. Cl.: C08L 77/06, C08L 51/00, C08L 51/04, C08L 53/00, C08L 55/02

(54) **Reversible thermotrope Kunststoff-Formmasse, Verfahren zu ihrer Herstellung und ihre Verwendung**
Reversible thermotropic composition, its preparation and use
Composition thermotropique, son procédé de préparation et utilisation

(30) Priorität: 09.09.1998 DE 19841234
(43) Veröffentlichungstag der Anmeldung: 15.03.2000
(73) Patentinhaber: EMS-Chemie AG, 7013 Domat/Ems (CH)
(72) Erfinder: Bühler, Friedrich Severin, Dr. rer.nat.Dipl.-Chem, 7430 Thusis (CH); Hewel, Manfred, Dr. rer. nat., 7415 Rodels (CH)
(74) Vertreter: Pfenning, Meinig & Partner

(56) Entgegenhaltungen:
- EP-A- 0 215 569
- EP-A- 0 259 097
- EP-A- 0 621 311
- EP-A- 0 803 539
- WO-A-90/03418

## Beschreibung

Die vorliegende Erfindung bezieht sich auf eine reversible thermotrope Kunststoff-Formmasse, ein Verfahren zu ihrer Herstellung sowie auf ihre Verwendung. Derartige Kunststoff-Formmassen werden für Abschattungssysteme zur Regulation von Lichtmenge sowie Temperatur benötigt. Sie können insbesondere zur Verglasung von Gebäuden, Gewächshäusern, Autos, Sonnenkollektorsystemen und dergleichen verwendet werden.

Nach dem Stand der Technik werden für derartige thermotrope Verglasungen die folgenden Systeme verwendet. Aus der DE 19 719 224 A1 der WO 9725358 A1 und der WO 9725357 A1 ist bekannt, daß thermotrope Gele zwischen zwei Glasplatten gebracht werden, wobei die thermotropen Gele sich bei steigender Temperatur entmischen, dadurch Streuzentren bilden und damit die Lichttransmission reduzieren. Beim Abkühlen mischen sich die thermotropen Gele wiederum und die Streuzentren verschwinden, wodurch die Transmission wieder zunimmt. Nachteilig an diesem System ist, daß die in dem Hydrogel bei der Entmischung und Vermischung ablaufenden Diffusionsprozesse langsam sind, so daß nur geringe Schaltzeiten erreicht werden können. Weiterhin können derartige Hydrogele nicht thermoplastisch verarbeitet werden und weisen selbst keinerlei für Kunststoffe übliche Gebrauchseigenschaften auf.

Weiterhin sind aus Solar Energie Mater. Sol. Cells (1993) Band 31, Seiten 197-214 in Polymere eingebettete Flüssigkristalle bekannt. In gleicher Weise sind aus Proc. SPIE. Int. Soc, Opt. Eng. (1992), Band 1728, Seiten 261-271 Folien beschrieben, die aus derartigen in Polymer eingebetteten Flüssigkristallen hergestellt wurden. In diesem Falle basiert der gewünschte thermotrope Effekt auf einer Änderung der Struktur der flüssigkristallinen Phase bei entsprechender Temperatur. Da die molekulare Umordnung der flüssigkristallinen Phase bei steigender Viskosität der Umgebung behindert wird, weisen auch diese Systeme lange Schaltzeiten auf. Weiterhin sind derartige flüssigkristalline Polymere teuere, kompliziert aufgebaute Materialien, die schlecht verarbeitbar sind und die mechanischen Eigenschaften des Matrix-Polymers negativ beeinflussen.

Mischungen von verschiedenen Polymeren sind in EP-A-0 259 097, EP-A-0 803 539, EP-A-0 215 569, EP-A-0 621 311 sowie der WO 90 039 18A offenbart.

Auch aus der DE 38 31 873 A1 sind Mischungen aus thermotropen, flüssigkristallinen Polymeren, Polycarbonat und Polyester, bekannt. Der Nachteil dieser Mischungen besteht darin, daß die flüssigkristallinen Polymere aufgrund der steifen anisotropen Segmente hart und spröde sind und damit die Zähigkeit von daraus hergestellten Gläsern negativ beeinflussen.

Aufgabe der vorliegenden Erfindung ist es daher, reversible thermotrope Formmassen, Verfahren zu ihrer Herstellung sowie Verwendungen derartiger Kunststoff-Formmassen zur Verfügung zu stellen, die einfach und kostengünstig ohne die beim Stand der Technik aufgezeigten Nachteile realisiert werden können.

Diese Aufgabe wird durch die thermotrope transparente Formmasse nach Anspruch 1, das Verfahren nach Anspruch 23 sowie die Verwendungen nach Anspruch 26 gelöst. Vorteilhafte Weiterbildungen der erfindungsgemäßen Kunststoff-Formmassen, Verfahren und Verwendungen werden in den abhängigen Ansprüchen gegeben.

Die erfindungsgemäße thermotrope transparente Formmasse besteht aus zwei Komponenten, wobei die erste Komponente aus einem transparenten Kunststoff besteht. Die zweite Komponente besteht aus einem Material, das mit der ersten Komponente nicht thermodynamisch mischbar ist und daher innerhalb der Gebrauchstemperatur immer zu der ersten Komponente in getrennter Phase vorliegt. Diese zweite Komponente besitzt eine Abhängigkeit des Brechungsindexes von der Temperatur, die verschieden zu der Abhängigkeit der ersten Komponente ist. Wird nun die Temperatur der Formmasse erhöht, so ändert sich der Brechungsindex der zweiten Komponente anders als der Brechungsindex der ersten Komponente und die Transparenz der Formmasse wird erniedrigt. Mit diesem Prinzip steht ein neuer Weg zur Erzeugung von Thermotropie der Gesamtformmasse aus erster und zweiter Komponente zur Verfügung, der weder auf Diffusionsprozessen beruht noch komplizierte flüssigkristalline Polymere mit geeignetem nematischem Übergang benötigt und der daher eine größere Auswahl an zweiten Komponenten ermöglicht, da diese nicht flüssigkristallin sein muß.

Die Thermotropie der erfindungsgemäßen Formmasse ist rerversibel und weist kurze Schaltzeiten auf, da keine Umlagerung von Kristallen oder Entmischungs/Mischungprozesse auftreten.

Die Trübungsstärke bzw. der Grad der Abdunklung bei erhöhter Temperatur der Formmasse ist dabei einfach über die Menge der zweiten Komponente in der Gesamtformmasse einstellbar. Durch die Verwendung einer Kunststoffbasis lassen sich insbesodere die mechanischen und elektrischen Eigenschaften der Formmasse leicht einstellen. Diese kann beispielsweise durch Zugabe geeigneter Additive witterungsstabil, chemikalienbeständig, kratzfest gemacht werden bzw. es können ihre Fließ-/Gleiteigenschaften modifiziert werden. Auf diese Weise ist auch die Herstellung schlagzähmodifizierter Gläser möglich.

Die erfindungsgemäße Formmasse kann durch Compoundieren, beispielsweise im Kneter oder Extruder zwangsgemischt werden oder als Di- oder Multiblockcopolymerisat polymerisiert werden. Ihre Verarbeitung ist mit sämtlichen üblichen Thermoformprozessen, wie Spritzgießen, Mehrkomponenten-Spritzgießen, Spritzblasen, Extrusion in beliebige Formteile möglich. Dadurch ist auch die Verbindung der Formmasse in Form von Folien oder Platten oder Fasern mit anderen Werkstoffen bzw. ein Kaschieren der Formteile bzw. Überspritzen oder auch Beschichten oder Lackieren möglich.

Mit der erfindungsgemäßen Formmasse sind daher sämtliche mit bekannten Verarbeitungstechniken für Thermoplaste mögliche Formen herstellbar.

Ändert sich der Brechungsindex der zweiten Komponente bei einer bestimmten Eintrübungstemperatur stark, so kann eine Art optischer Schalter bzw. Schalteffekt erzielt werden. Besonders einfach können derartige Schalteffekte dadurch erzielt werden, daß die zweite Komponente in dem interessierenden Temperaturbereich einen Phasenübergang, beispielsweise einen Übergang Glas/Schmelze oder fest/flüssig besitzt. Da die beiden Komponenten thermodynamisch unverträglich sind, bleiben die Mikrophasen der beiden Komponenten auch in der Schmelze bzw. dem Glas stabil und entmischt. Es ergibt sich dann eine spontane, besonders starke Trübung bei der Phasenübergangstemperatur. Diese Trübungstemperatur ist durch geeignete Wahl der Komponente B einstellbar und dem jeweiligen Verwendungszweck der thermotrop transparenten Formmasse anpaßbar. Bei mehreren aufeinanderfolgenden Phasenübergängen kann die Trübung des Gesamtsystems kontinuierlich mit der Temperatur geführt werden.

Mehrere aufeinanderfolgende Phasenübergänge lassen sich insbesodere mit Kern-Mantel-Block-Copolymeren mit mindestens zwei Phasen getrennten Schalen mit verschiedenen Umwandlungstemperaturen erzeugen.

Die Formmasse besitzt vorteilhafterweise 1 - 99 Gew-% der ersten Komponente, 99 - 1 Gew.-% der zweiten Komponente und gegebenenfalls weitere Additive mit einem Gewichtsanteil von 0 - 50 Gew.-%, wobei die Anteile so gewählt sind, daß sich insgesamt 100 Gew.-% ergeben. Vorteilhafterweise beträgt der Anteil der ersten Komponente zwischen 50 und 99 Gew.-%, vorzugsweise zwischen 70 und 99 Gew.-%.

Die erste Komponente besteht vorteilhafterweise aus einem oder mehreren untereinander mischbaren Polymeren, so daß die Matrix der Formmasse beliebig zwischen den Eigenschaften eines transparenten Kautschuks und denen eines transparenten Glases eingestellt werden können. Auch die zweite Komponente besteht vorteilhafterweise aus einem oder mehreren untereinander mischbaren Polymeren. Dieses Polymer kann beispielsweise zugleich ein Schlagzähmodifikator sein, so daß die mechanischen Eigenschaften der Formmasse verbessert werden. Wenn die Formmasse derart aus einem zweiphasigen Polymersystem besteht, können je nach den Volumenverhältnissen der beiden Komponenten verschiedene Morphologien erzeugt werden. So kann beispielsweise bei einem Anteil von 1 - 30 % der zweiten Komponente eine Struktur erzeugt werden, bei denen Kugeln der zweiten Komponente in einer Matrix aus der ersten Komponente vorliegen. Bei einem Anteil von 1 - 30 % der ersten Komponente liegen andererseits Kugeln der ersten Komponente in einer Matrix der zweiten Komponente vor.

Die erste und die zweite Komponente können auch als Di- oder Multiblockcopolymerisat erzeugt werden. Dadurch sind weitere Morphologien möglich. Beispielsweise entstehen bei einem Verhältnis zwischen der ersten und der zweiten Komponente von 70 : 30 bzw. 30 : 70 zylindrische Strukturen, die in das jeweilige Matrixpolymer eingebettet sind. Der Zylinderdurchmesser ist dabei abhängig vom Molekulargewicht des zylinderformenden Polymerblockes. Er beträgt gewöhnlich zwischen 1 und 100 nm. Bei einem Mischungsverhältnis von 50 : 50 ergeben sich Mikroschichten mit Dicken zwischen 10 und 100 nm, die im Querschnitt lamellenartig abwechselnd angeordnet sind. Um diese Mikrostrukturen in lichstreuaktive Größen zu bringen, können die erste und die zweite Komponente in gleichem Volumenverhältnis als Homopolymere in diese Blockcopolymerisate eincompoundiert werden.

Die zweite Komponente besitzt vorteilhafterweise eine lichtstreuaktive Größe über 100 nm, vorzugsweise über 300 nm.

Für die erste Komponente eignen sich die folgenden Kunststoffe: transparente Kautschuke, PVC, PC, PMMA, PS, Polyester, Cykloolefine, vorzugsweise transparente Polyamide, Copolyamide oder Polyurethane bzw. Copolymerisate oder Mischungen davon.

Für die zweite Komponente eignen sich die folgenden Kunststoffe: transparente Polymere, Copolymere oder Blockcopolymere oder deren Mischungen aus den Monomeren Vinylsäureester, Methacrylsäureester, Acrylnitril, Glycidyl, Styrol, alpha-Methylstyrol, Norboren, Ethylen, Propylen, Butylen, Isopren, Butadien, n-Buten, Silan, Siloxan, Isophthalsäure, Terephthalsäure, Diolene, Diamine, Aminocarbonsäuren, Dicarbonsäuren, Hydroxycarbonsäuren oder Diisocyanate. Insbesondere durch die Verwendung von Copolymeren bzw. durch die blockbildende Copolymerisation kann der Verlauf der Brechungsindizes sowie der Phasenübergangstemperaturen der zweiten Komponente geeignet eingestellt werden.

Durch die genannten Kunststoffe können weiterhin die mechanischen Eigenschaften, beispielsweise die Schlagzähigkeit, Kerbschlagzähigkeit, Wechselbiegefestigkeit sowie die Temperaturbeständigkeit verbessert werden, so daß die Herstellung von Gläsern, die auch unter - 40 °C bruchsicher sind, möglich ist.

Besonders vorteilhaft besteht die zweite Komponente aus Copolymeren, Blockcopolymeren und/oder Multiblockcopolymeren aus Styrol-Butadien, Styrol-Isopren, Styrol-Butadien-Acrylnitril, vorzugsweise Terpolymeren aus Copolymeren, Blockpolymeren, Multiblockcopolymeren aus Ethylen-Acrylsäureester-Glycidyl-Methacrylat, Ethylen-Glycidyl-Methacrylat oder Mischungen daraus. Derartige geeignete Terpolymere sind beispielsweise Lotader GMA oder AX-Typen von Elf Atochem., vorzugsweise Methacrylat-Butadien-Styrol-Block- oder Multiblockcopolymere wie beispielsweise die Paraloid Typen von Rohm & Haas, insbesondere Paraloid B-Typen, wie Paraloid BTA753 für Grilamid PR-TR55 von EMS-Inventa AG.

Besteht die zweite Komponente aus einem Copolymer zweier Monomere, so kann insbesondere ein Monomer mit einem Brechungsindex kleiner und ein Monomer mit einem Brechungsindex größer als der Brechungsindex der ersten Komponente ausgewählt werden. Durch die geeignete Einstellung der Gewichts-Verhältnisse der beiden Monomere in dem Copolymer kann der Brechungsindex der zweiten Komponente im transparenten Temperaturbereich exakt auf den Brechungsindex der ersten Komponente eingestellt werden, wodurch sich eine besonders gute Transparenz ergibt.

Die zweite Komponente kann weiterhin aufgepfropfte Gruppen zur Phasenanhaftung der ersten Komponente aufweisen, wodurch eine verbesserte Haftvermittlung zwischen den beiden nichtmischbaren Komponenten erzielt wird. Eine derartige aufgepfropfte Gruppe kann beispielsweise aus Maleinsäureanhydrid bestehen.

Die beiden Komponenten können weiterhin einzeln bzw. gemeinsam eingefärbt sein, um besondere Farbeffekte zu erzeugen. Diese können durch entsprechende Einfärbung der einzelnen Komponenten auch phasenspezifisch sein. Die Färbung kann bereits während der Compoundierung oder auch später erfolgen.

Die erfindungsgemäße Formmasse kann mit beliebigen, ansonsten bekannten Verfahren zur Formung von Thermoplasten wie Verbundspritzgußverfahren, Spritzgießen, Mehrkomponentenspritzgießen, Spritzblasen, Extrusion oder auch Extrusionsblasformen beispielsweise in Platten, Folien oder Fasern oder dergleichen geformt werden. Sie kann dann als bruchsicheres Glas, als Kaschier-, Schmelzklebe- oder Haftfolie zur Verglasung oder für Abschattungssysteme zur Gebäudeverglasung, Fahrzeugverglasung, Gewächshausverglasung, durch Abdeckung landwirtschaftlich genutzter Flächen, für Brillenlinsen bzw. zur Beschichtung von Brillenlinsen, als Farbeffektbeschichtung, für Verkehrs- und Hinweisschilder, für Temperaturmeßstreifen, Sonnenkollektoren, Photovoltaikanlagen, Verpackungen, Lampenschirme oder auch Leuchtenabdeckungen verwendet werden.

Lampenschirme oder Leuchtenabdeckungen können so beispielsweise im abgeschalteten Zustand transparent sein, wodurch beispielsweise eine rasche visuelle Kontrolle und Wartung der Leuchten oder Lampen im Abschaltzustand möglich ist. Landwirtschaftliche Böden können mit der erfindungsgemäßen Abdeckung einerseits bei großer Hitze vor Austrocknung geschützt werden und andererseits durch Abschattung die Bodentemperatur reguliert werden.

Die thermotrop transparente Formmasse kann auch zur Anzeige oder Verdeckung von lesbaren Informationen oder Pictogrammen dienen. Hierzu wird entweder die lesbare Information mit der Formmasse auf einem Träger aufgeschrieben, so daß diese oberhalb einer bestimmten Temperatur, wenn die Formmasse trübe wird, lesbar wird oder es kann eine Formmasse über einer lesbareen Information als Abdeckung aufgebracht werden, wodurch die Information erst unterhalb einer bestimmten Temperatur, bei deren Unterschreitung die Formmasse transparent wird, lesbar wird. Diese Formmassen eignen sich daher für temperaturabhängige Datenträger oder auch beidseitig lesbare Informationstafeln sowie für thermische Steuerungen für die optische Datenübertragung. Derartige temperaturabhängige Datenträger können dann durch Erwärmung reversibel beschrieben oder auch gelöscht werden. Dazu kann die Formmasse beispielsweise mit Laserstrahlen erwärmt und sehr scharf beschrieben oder bemalt werden. Sobald die punktuell erwärmten Bereiche wieder abkühlen, verschwindet das Bild oder die Information wieder. Die Formmasse, beispielsweise eine Scheibe, ist dann wieder vollständig transparent. Folglich ist eine reversible und temporäre Beschriftung mit Wärme möglich.

Selbstverständlich kann die thermotrope Formmasse auch durch ein- oder mehrschichtigen Lackauftrag, beispielsweise zur Erhöhung der Kratzfestigkeit, der Chemikalienbeständigkeit oder der Transparenz weiter veredelt werden. Geeignete Lackierungen sind für zusätzliche dekorative Effekte nutzbar.

Im folgenden werden einige beispielhafte Ausführungsformen der vorliegenden Erfindung beschrieben.

### Beispiel 1

Die erste Komponente wurde in ansonsten bekannter Weise durch ein Polykondensationsverfahren mit Bis-(2,2-dimethyl-cyclohecylamin)-methan, Dodekandisäure und für diesen Prozeß üblichen Additiven hergestellt. Nach Abschluß der Reaktion wurde die Polymerschmelze abgelassen, granuliert und getrocknet.

Es ergab sich ein glasklares, transparentes, amorphes Polyamid mit einer Lichtdurchlässigkeit von 92 % bei einer Dicke von 3 mm und einer Übergangstemperatur zwischen Glas/Schmelze Tg von 153 °C und einem Brechungsindex von 1,509.

Das Granulat wurde auf üblichen Spritzgießmaschinen bei einer Massetemperatur von 260 °C bis 290 °C und einer Formtemperatur zwischen 40 °C und 60 °C zu Platten mit den Außenmaßen von 100 mm x 100 mm x 4 mm verspritzt.

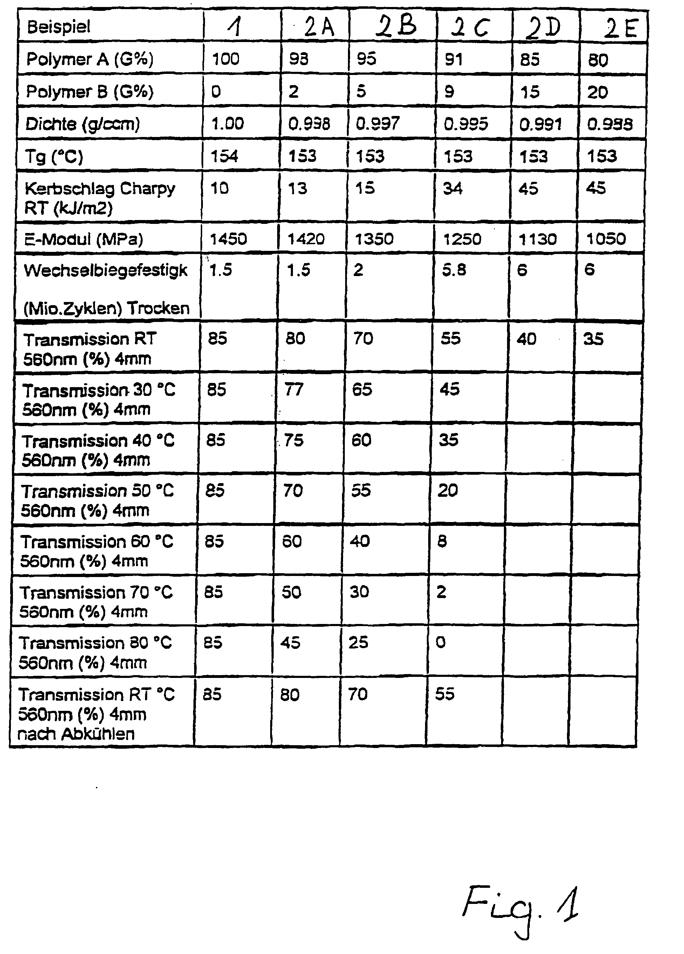

Die Transmission dieser Platten wurde anschließend bei 560 nm mit einem UV-Spektrometer bestimmt. Dazu wurden die Platten mit einer Rate von 10 °C pro Minute aufgeheizt und in Abständen von 10 °C eine Transmissionsmessung durchgeführt. Bis zum Erreichen des Tg fand keinerlei Änderung der Lichttransmission statt (siehe Fig. 1, Beispiel 1).

### Beispiel 2

Es wurde eine erfindungsgemäße transparente, reversibel thermotrope Formmasse hergestellt. Hierzu wurde als erste Komponente das Polyamid aus Beispiel 1 mit einem Brechungsindex von 1,509 mit einem Anteil zwischen 99 und 70 Gew.-% verwendet. Die zweite Komponente, die ebenfalls einen Brechungsindex von 1,509 aufwies, bestand aus Lotader AX 8840 mit einem zur ersten Komponente komplementären Anteil zwischen 1 Gew.-% und 30 Gew.-%. Beide Komponenten wurden auf üblichen Ein- oder Zweiwellenextrudern bei Massetemperaturen von 260 °C - 300 °C compoundiert. Die Stränge wurden im Wasserbad gekühlt. Daran schloß sich eine Granulierung und Trocknung für 12 Stunden bei 80 bis 100 °C im Vakuumtrockner an. Es wurden wiederum Platten mit den Außenmaßen 100 mm x 100 mm x 4 mm aus dem Granulat wie in Beispiel 1 geschildert, hergestellt und anschließend in entsprechender Weise die Transmission der Platten bestimmt.

Die Ergebnisse dieser Transmissionsmessung sind in Fig. 1 zusammengestellt. Die erste Komponente (Polymer A) zeigt innerhalb des gemessenen Temperaturbereiches keine Änderung der Lichttransmission (siehe Beispiel 1) während bei Zugabe von Polymer B mit zunehmender Menge bereits bei niedrigeren Temperaturen deutliche Abdunklungseffekte gemessen werden. Die Schaltzeiten sind gering, die Eintrübung verläuft parallel zur Probentemperatur. Bei Abkühlung verläuft dieser Prozeß umgekehrt, jedoch leicht verzögert, bis zur Ausgangstransmission. Bei ansteigender Menge der zweiten Komponente (Polymer B) nimmt der thermotrope Effekt zu. Bei einem Gewichtsanteil von 9 Gew.-% des Polymers B, wie in der vierten Spalte beschrieben, findet bei 4 mm Wandstärke bereits bei 80 °C spontan eine vollständige Abdunklung der Platte statt. Nach Abkühlen auf Raumtemperatur steigt die Lichtdurchlässigkeit wieder auf den Ausgangswert an. Die Trägheit dieser Änderung der Lichtdurchlässigkeit hängt dabei lediglich von der Zeit ab, die die Platte für den Wärmeabgleich benötigt und nicht von der Geschwindigkeit diffusiver Transportvorgänge.

Der Tg der erfindungsgemäßen Formmasse bleibt im untersuchten Bereich (bis 20 Gew.-% Polymer B) stabil, während sich die Kerbschlagzähigkeit und die dynamische Zähigkeit (Wechselbiegezyklen) deutlich steigern läßt.

### Beispiel 3

Es wurde als erste Komponente ein glasklares, transparentes, amorphes Copolyamid mit einer Lichtdurchlässigkeit von 90 % bei 3 mm Dicke und einem Tg von 165 °C, sowie einem Brechungsindex von 1,538 hergestellt. Die Herstellung erfolgte dabei durch ein ansonsten bekanntes Polykondensationsverfahren von 39,2 Gew.-% Bis-(2,2-dimethyl-cyclohecylamin)-methan, 26,8 Gew.-% Isophthalsäure und 34 Gew.-% Laurinlactam sowie für den Prozeß üblichen bekannten Additiven. Nach Abschluß der Reaktion wurde die Polymerschmelze abgelassen, granuliert und getrocknet.

Das Granulat wurde auf üblichen Spritzgießmaschinen bei Massetemperaturen zwischen 260 °C und 290 °C sowie einer Formtemperatur zwischen 40 °C und 60 °C zu Platten mit den Außenmaßen 100 mm x 100 mm x 4 mm verspritzt.

Bei der Messung der Transmission der Platten zeigt dieses Copolyamid keinerlei Trübung im Temperaturbereich zwischen 20 °C und 300 °C.

### Beispiel 4

Das Copolyamid aus Beispiel 3 wird mit 30 Gew.-% Polyamid 12 (Grilamid L25 von EMS-Inventa AG) und 9 Gew.-% Paraloid BTA753 bei 280 °C extrudiert, granuliert und getrocknet. Das Copolyamid aus Beispiel 3 ist dabei mit Polyamid 12 einphasig mischbar, wenn starke Scherkräfte verwendet werden und diese Mischung bildet die erste transparente Komponente. Paraloid BTA753 als zweite Komponente weist einen Brechungsindex um 1,538 auf. Es enthält aufgepfropfte Maleinsäureanhydridgruppen, die bei der Compoundierung mit dem Copolyamid reagieren. Der Tg der thermotropen Formmasse lag zwischen 100 °C und 110 °C.

Das Granulat wurde auf üblichen Spritzgießmaschinen bei einer Massetemperatur zwischen 250 °C und 280 °C sowie einer Formtemperatur zwischen 40 °C und 60 °C zu Platten mit den Außenmaßen 100 mm x 100 mm x 4 mm verspritzt.

Heizt man die Platten auf 70 °C auf, so entsteht eine deutliche Trübung. Beim weiteren Aufheizen der Platte auf 120 °C erweicht die Formmasse und bildet eine trübe Schmelze. Dies ist ein Indiz dafür, daß die Trübung nicht durch Mikrorisse infolge unterschiedlicher thermischer Ausdehnung der einzelnen nicht miteinander vermischten Phasen verursacht wurde. Kühlt man die erfindungsgemäße Formmasse wieder auf Raumtemperatur ab, so erhält man wieder die ursprüngliche Transparenz.

## Patentansprüche

1. Thermotrop transparente Formmasse mit mindestens zwei Komponenten, wobei eine erste Komponente aus transparentem Kunststoff besteht,
**dadurch gekennzeichnet,**
**daß** eine zweite Komponente aus einem nicht flüssigkristallinen und mit dem ersten Kunststoff nicht thermodynamisch mischbaren Material besteht, das eine zur ersten Komponente verschiedene Abhängigkeit des Brechungsindexes von der Temperatur aufweist.

2. Formmasse nach mindestens einem der vorhergehenden Ansprüche, **dadurch gekennzeichnet, daß** die zweite Komponente bei einer Eintrübungstemperatur einen Phasenübergang Glas/Schmelze oder einen Schmelzpunkt besitzt.

3. Formmasse nach mindestens einem der vorhergehenden Ansprüche, **dadurch gekennzeichnet, daß** die erste und die zweite Komponente im transparenten Temperaturbereich denselben Brechungsindex besitzen.

4. Formmasse nach mindestens einem der vorhergehenden Ansprüche, **dadurch gekennzeichnet, daß** sie weitere Komponenten, beispielsweise Verstärkungsstoffe, Farbstoffe, Flammschutzmittel, Gleitmittel, Stabilisatoren, Antioxidantien, Weichmacher, Füllstoffe und dergleichen Additive enthält.

5. Formmasse nach dem vorhergehenden Anspruch, **dadurch gekennzeichnet, daß** die weiteren Komponenten Glaskugeln, Glasfasern und/oder Polymerfasern sind.

6. Formmasse nach einem der beiden vorhergehenden Ansprüche, **dadurch gekennzeichnet, daß** die weiteren Komponenten isorefraktiv zu der ersten Komponente sind.

7. Formmasse nach mindestens einem der vorhergehenden Ansprüche, **dadurch gekennzeichnet, daß** der Anteil der ersten Komponente 1 - 99 Gew.-%, der zweite Komponente 99 - 1 Gew.-% und gegebenenfalls der weitere Komponenten 0 - 50 Gew.-% beträgt, wobei die Anteile so gewählt sind, daß sich insgesamt 100 Gew.-% ergeben.

8. Formmasse nach dem vorhergehenden Anspruch, **dadurch gekennzeichnet, daß** der Anteil der ersten Komponente 50 - 99 Gew-% und der zweiten Komponente 99 - 50 Gew.-% beträgt.

9. Formmasse nach mindestens einem der vorhergehenden Ansprüche, **dadurch gekennzeichnet, daß** die erste Komponente aus einem Polymer oder mehreren untereinander mischbaren Polymeren besteht.

10. Formmasse nach mindestens einem der vorhergehenden Ansprüche, **dadurch gekennzeichnet, daß** die zweite Komponente aus einem Polymer oder mehreren untereinander mischbaren Polymeren, beispielsweise Schlagzähmodifikatoren, besteht.

11. Formmasse nach mindestens einem der vorhergehenden Ansprüche, **dadurch gekennzeichnet, daß** sie aus einem zweiphasigen Polymersystem besteht.

12. Formmasse nach dem vorhergehenden Anspruch, **dadurch gekennzeichnet, daß** die erste und die zweite Komponente ein Di- oder Multiblockcopolymerisat bilden.

13. Formmasse nach mindestens einem der vorhergehenden Ansprüche, **dadurch gekennzeichnet, daß** die erste Komponente aus einem der folgenden Kunststoffe besteht: transparente Kautschuke, PVC, PC, PMMA, PS, Polyester, Cycloolefine, vorzugsweise transparente Polyamide, Copolyamide oder Polyurethane bzw. Copolymerisaten oder Mischungen davon.

14. Formmasse nach mindestens einem der vorhergehenden Ansprüche, **dadurch gekennzeichnet, daß** die zweite Komponente aus einem der folgenden Kunststoffe besteht: transparente Polymere, Copolymere oder Blockcopolymere oder deren Mischungen aus den Monomeren Vinylchlorid, Vinylidenchlorid, Bisphenol A, Acrylsäure, Methacrylsäure, Acrylsäureester, Methacrylsäureester, Acrylnitril, Glycidyl, Styrol, alpha-Methylstyrol, Norbornen, Ethylen, Propylen, Butylen, Isopren, Butadien, n-Buten, Silan, Siloxan, Isophthalsäure, Terephthalsäure, Diole, Diamine, Aminocarbonsäuren, Dicarbonsäuren, Hydroxycarbonsäuren oder Diisocyanate.

15. Formmasse nach dem vorhergehenden Anspruch, **dadurch gekennzeichnet, daß** die zweite Komponente aus Copolymeren, Blockcopolymeren und/oder Multiblockcopolymeren aus Styrol-Butadien, Styrol-Isopren, Styrol-Butadien-Acrylnitril, vorzugsweise Terpolymere aus Copolymeren, Blockcopolymeren oder Multiblockcopolymeren aus Ethylen-Acrylsäureester-Glycidyl-Methacrylat, Ethylen-Glycidyl-Methacrylat oder Mischungen daraus.

16. Formmasse nach mindestens einem der vorhergehenden Ansprüche, **dadurch gekennzeichnet, daß** die zweite Komponente aus einem Copolymer zweier Monomere besteht, wobei eines der Monomere einen Brechungsindex kleiner und eines der Monomere einen Brechungsindex größer als die erste Komponente besitzt.

17. Formmasse nach mindestens einem der vorhergehenden Ansprüche, **dadurch gekennzeichnet, daß** die zweite Komponente ein Kern-Mantel-Blockcopolymer mit mindestens zwei phasengetrennten Schalen mit verschiedenen Phasenumwandlungstemperaturen ist.

18. Formmasse nach mindestens einem der vorhergehenden Ansprüche, **dadurch gekennzeichnet, daß** die zweite Komponente aus einem Polymer mit aufgepfropften Gruppen zur Phasenhaftung der ersten Komponente besteht.

19. Formmasse nach dem vorhergehenden Anspruch, **dadurch gekennzeichnet, daß** die aufgepfropfte Gruppe Maleinsäureanhydrid ist und die erste Komponente aus einem Polyamid oder Copolyamid besteht.

20. Formmasse nach mindestens einem der vorhergehenden Ansprüche, **dadurch gekennzeichnet, daß** die dispergierte Phase der zweiten Komponente eine lichtstreuaktive Grösse von über 100 nm, vorzugsweise über 300 nm aufweist.

21. Formmasse nach mindestens einem der vorhergehenden Ansprüche, **dadurch gekennzeichnet, daß** die erste Komponente und/oder die zweite Komponente eingefärbt ist.

22. Verfahren zur Herstellung einer Formmasse nach mindestens einem der vorhergehenden Ansprüche, **dadurch gekennzeichnet, daß** die erste und die zweite Komponente durch Compoundieren, beispielsweise im Kneter oder Extruder zwangsgemischt werden oder als Di- oder Multiblockcopolymerisat polymerisiert werden.

23. Verfahren nach dem vorhergehenden Anspruch, **dadurch gekennzeichnet, daß** sie anschließend durch geeignete Verfahren, beispielsweise Spritzgießen, Mehrkomponentenspritzgießen, Spritzblasen, Extrusion oder Extrusionsblasformen, in Formteile wie Platten, Folien, Fasern oder andere Formen geformt wird.

24. Verfahren nach einem der beiden vorhergehenden Ansprüche, **dadurch gekennzeichnet, daß** sie anschließend mit anderen Werkstoffen wie Glas, Holz, Metall, Keramik und dergleichen, beispielsweise durch Überspritzen oder Kaschieren, verbunden wird.

25. Verwendung einer Formmasse nach mindestens einem der Ansprüche 1 bis 21 zur Herstellung von Formteilen wie Platten, Folien, oder Fasern.

26. Verwendung nach dem vorhergehenden Anspruch für bruchsicheres Glas, als Kaschier-, Schmelzklebeoder Haftfolie, für Verglasungen oder Abschattungssysteme, zur Gebäudeverglasung, Fahrzeugverglasung, Gewächshausverglasung, zur Abdeckung landwirtschaftlich genutzter Flächen, für Brillenlinsen bzw. Beschichtung von Brillenlinsen, Farbeffektbeschichtungen, Verkehrs- und Hinweisschilder, Temperaturmeßstreifen, für Sonnenkollektoren, Photovoltaikanlagen, Verpackungen, für Lampenschirme oder Leuchtenabdeckungen.

27. Verwendung nach Anspruch 26 zur temperaturabhängigen Anzeige oder Verdeckung von lesbaren Informationen oder Pictogrammen, für temperaturabhängige Datenträger oder beidseitig lesbare Informationstafeln sowie für thermische Steuerungen für die optische Datenübertragung.

## Claims

1. A thermotropically transparent moulding composition with at least two components, where a first component is composed of transparent plastic,
**characterized in that**
a second component is composed of a material which is not liquid-crystalline and is not thermodynamically miscible with the first plastic and which, when compared with the first component, has a different dependency of refractive index on temperature.

2. Moulding composition according to at least one of the preceding claims, **characterized in that** the second component has a melting point or a glass/melt phase transition at a clouding temperature.

3. Moulding composition according to at least one of the preceding claims, **characterized in that** the first and the second component have the same refractive index in the transparent temperature range.

4. Moulding composition according to at least one of the preceding claims, **characterized in that** it comprises other components, such as reinforcing materials, dyes, flame retardants, lubricants, stabilizers, antioxidants, plasticizers, fillers and similar additives.

5. Moulding composition according to the preceding claim, **characterized in that** the other components are glass beads, glass fibres and/or polymer fibres.

6. Moulding composition according to one of the two preceding claims, **characterized in that** the other components are isorefractive with respect to the first component.

7. Moulding composition according to at least one of the preceding claims, **characterized in that** the proportion of the first component is 1-99% by weight, of the second component is 99-1% by weight and, where appropriate, of the other components is from 0 to 50% by weight, the proportions having been selected in such a way that the total is 100% by weight.

8. Moulding composition according to the preceding claim, **characterized in that** the proportion of the first component is 50-99% by weight and of the second component is 99-50% by weight.

9. Moulding composition according to at least one of the preceding claims, **characterized in that** the first component is composed of a polymer or of two or more mutually miscible polymers.

10. Moulding composition according to at least one of the preceding claims, **characterized in that** the second component is composed of a polymer or of two or more mutually miscible polymers, such as impact modifiers.

11. Moulding composition according to at least one of the preceding claims, **characterized in that** it is composed of a two-phase polymer system.

12. Moulding composition according to the preceding claim, **characterized in that** the first and the second component form a di- or multiblock copolymer.

13. Moulding composition according to at least one of the preceding claims, **characterized in that** the first component is composed of one of the following plastics: transparent rubbers, PVC, PC, PMMA, PS, polyesters, cycloolefins, and preferably transparent polyamides, copolyamides or polyurethanes or copolymers or mixtures thereof.

14. Moulding composition according to at least one of the preceding claims, **characterized in that** the second component is composed of one of the following plastics: transparent polymers, copolymers or block copolymers or their mixtures composed of the monomers vinyl chloride, vinylidene chloride, bisphenol A, acrylic acid, methacrylic acid, acrylate, methacrylate, acrylonitrile, glycidyl, styrene, alphamethylstyrene, norbornene, ethylene, propylene, butylene, isoprene, butadiene, n-butylene, silane, siloxane, isophthalic acid, terephthalic acid, diols, diamines, aminocarboxylic acids, dicarboxylic acids, hydroxycarboxylic acids or diisocyanates.

15. Moulding composition according to the preceding claim, **characterized in that** the second component is composed of copolymers, block copolymers and/or multiblock copolymers composed of styrenebutadiene, styrene-isoprene, styrene-butadiene-acrylonitrile, preferably terpolymers composed of copolymers, block copolymers or multiblock copolymers composed of ethylene-acrylate-glycidyl methacrylate, ethylene-glycidyl methacrylate or a mixture thereof.

16. Moulding composition according to at least one of the preceding claims, **characterized in that** the second component is composed of a copolymer of two monomers, where the refractive index of one of the monomers is smaller, and the refractive index of one of the monomers is greater, than that of the first component.

17. Moulding composition according to at least one of the preceding claims, **characterized in that** the second component is a core-shell block copolymer with at least two phase-separated shells with different phase transition temperatures.

18. Moulding composition according to at least one of the preceding claims, **characterized in that** the second component is composed of a polymer having grafted-on groups for adhesion to the phase of the first component.

19. Moulding composition according to the preceding claim, **characterized in that** the grafted-on group is maleic anhydride and the first component is composed of a polyamide or copolyamide.

20. Moulding composition according to at least one of the preceding claims, **characterized in that** the disperse phase of the second component has an effective light-scattering dimension of more than 100 nm, preferably more than 300 nm.

21. Moulding composition according to at least one of the preceding claims, **characterized in that** the first component and/or the second component has been coloured.

22. Process for preparing a moulding composition according to at least one of the preceding claims, **characterized in that** the first and the second component undergo mechanical mixing via compounding, for example in a kneader or extruder, or are polymerized in the form of a di- or multiblock copolymer.

23. Process according to the preceding claim, **characterized in that** it is then moulded via suitable processes, such as injection moulding, multicomponent injection moulding, injection blow moulding, extrusion or extrusion blow moulding, to give mouldings such as sheets, films, fibres or other shapes.

24. Process according to one of the two preceding claims, **characterized in that** it is then bonded to other materials such as glass, wood, metal, ceramic and the like, for example via lamination or coating from a pressurized source.

25. Use of a moulding composition according to at least one of Claims 1 to 21 for producing mouldings such as sheets, films, or fibres.

26. Use according to the preceding claim for safety glass, in the form of a lamination film, hot-melt-adhesive film, or adhesive film, for glazing or shading systems, for glazing of buildings, vehicle glazing, greenhouse glazing, for the covering of agricultural areas, for spectacle lenses or coating of spectacle lenses, special-effect colour coatings, traffic signs and informative signs, strip thermometers, for solar collectors, photovoltaic systems, packaging, for lamp shades or lamp covers.

27. Use according to Claim 26 for the temperature-dependent display or concealment of legible information or of pictograms, for temperature-dependent data carriers or bilaterally legible information panels, or else for thermal control systems for optical data transfer.

## Revendications

1. Masse moulée transparente et thermotrope, comprenant au moins deux composants, où un premier composant se compose de matière plastique transparente, **caractérisée en ce qu'**un second composant se compose d'un matériau qui n'est pas un cristal liquide et qui n'est pas miscible thermodynamiquement avec la première matière plastique, qui présente une dépendance de l'indice de réfraction vis à vis de la température différente de celle du premier composant.

2. Masse moulée selon au moins une des revendications précédentes, **caractérisée en ce que** le second composant possède une transition de phase verre/matière fondue ou un point de fusion à une température de turbidité.

3. Masse moulée selon au moins une des revendications précédentes, **caractérisée en ce que** le premier et le second composants possèdent le même indice de réfraction dans la zone de température de la transparence.

4. Masse moulée selon au moins une des revendications précédentes, **caractérisée en ce qu'**elle contient d'autres composants, par exemple des matières de renforcement, des colorants, des ignifuges, des agents glissants, des stabilisateurs, des antioxydants, des plastifiants, des charges et additifs similaires.

5. Masse moulée selon la revendication précédente, **caractérisée en ce que** les autres composants sont des billes de verre, des fibres de verre et/ou des fibres polymères.

6. Masse moulée selon l'une des deux revendications précédentes, **caractérisée en ce que** les autres composants sont isoréfractifs par rapport au premier composant.

7. Masse moulée selon au moins l'une des revendications précédentes, **caractérisée en ce que** la proportion du premier composant va de 1 à 99 % en poids, la proportion du second composant va de 99 à 1 % en poids et, le cas échéant, la proportion des autres composants va de 0 à 50 % en poids, les proportions étant choisies de manière à ce qu'elles donnent 100 % en poids au total.

8. Masse moulée selon la revendication précédente, **caractérisée en ce que** la proportion du premier composant va de 50 à 99 % en poids et du second composant de 99 à 50 % en poids.

9. Masse moulée selon au moins l'une des revendications précédentes, **caractérisée en ce que** le premier composant se compose d'un polymère ou de plusieurs polymères miscibles entre eux.

10. Masse moulée selon au moins l'une des revendications précédentes, **caractérisée en ce que** le premier composant est constitué d'un polymère ou de plusieurs polymères miscibles entre eux, par exemple des modificateurs de résistance aux chocs.

11. Masse moulée selon au moins une des revendications précédentes, **caractérisée en ce qu'**elle se compose d'un système polymère biphase.

12. Masse moulée selon la revendication précédente, **caractérisée en ce que** le premier et le second composants forment un copolymère dibloc ou multibloc.

13. Masse moulée selon au moins l'une des revendications précédentes, **caractérisée en ce que** le premier composant se compose d'une des matières plastiques suivantes : caoutchoucs transparents, PVC, PC, PMMA, PS, polyester, cyclo-oléfines, polyamides de préférence transparents, copolyamides ou polyuréthanes ou bien copolymères ou mélanges de ceux-ci.

14. Masse moulée selon au moins l'une des revendications précédentes, **caractérisée en ce que** le second composant se compose d'une des matières plastiques suivantes : polymères, copolymères ou copolymères blocs transparents ou leurs mélanges formés des monomères chlorure de vinyle, chlorure de vinylidène, bisphénol A, acide acrylique, acide méthacrylique, ester d'acide acrylique, ester d'acide méthacrylique, acrylonitrile, glycidyle, styrène, alpha-méthylstyrène, norbornène, éthylène, propylène, butylène, isoprène, butadiène, n-butène, silane, siloxane, acide isophtalique, acide téréphtalique, diols, diamines, acides aminocarboxyliques, acides dicarboxyliques, acides hydroxycarboxyliques ou diisocyanates.

15. Masse moulée selon la revendication précédente, **caractérisée en ce que** le second composant est formé de copolymères, copolymères blocs et/ou copolymères multiblocs formés de styrène - butadiène, styrène - isoprène, styrène - butadiène - acrylonitrile, de préférence terpolymères de copolymères, copolymères blocs ou copolymères multiblocs constitués d'ester d'acide éthylène - acrylique - glycidyle - méthacrylate, d'éthylène - glycidyle - méthacrylate ou de mélanges de ceux-ci.

16. Masse moulée selon l'une des revendications précédentes, **caractérisée en ce que** le second composant se compose d'un copolymère de deux monomères, où un des monomères possède un indice de réfraction inférieur et un des monomères un indice de réfraction supérieur au premier composant.

17. Masse moulée selon au moins l'une des revendications précédentes, **caractérisée en ce que** le second composant est un copolymère bloc âme - gaine ayant au moins deux enveloppes de phases séparées avec différentes températures de transition de phase.

18. Masse moulée selon au moins l'une des revendications précédentes, **caractérisée en ce que** le second composant est constitué d'un polymère ayant des groupes greffés pour l'adhérence de phase du premier composant.

19. Masse moulée selon la revendication précédente, **caractérisée en ce que** le groupe greffé est l'anhydride d'acide maléique et le premier composant est constitué d'un polyamide ou copolyamide.

20. Masse moulée selon au moins l'une des revendications précédentes, **caractérisée en ce que** la phase dispersée du second composant présente une grandeur active à la dispersion de la lumière de plus de 100 nm, de préférence de plus de 300 nm.

21. Masse moulée selon au moins l'une des revendications précédentes, **caractérisée en ce que** le premier composant et/ou le second composant est coloré.

22. Procédé de fabrication d'une masse moulée selon au moins l'une des revendications précédentes, **caractérisé en ce que** le premier et le second composants sont mélangés intimement par compoundage, par exemple dans un pétrisseur ou une extrudeuse, ou sont polymérisés sous forme de copolymère dibloc ou multibloc.

23. Procédé selon la revendication précédente, **caractérisé en ce qu'**elle est formée ensuite par des procédés appropriés, par exemple le moulage par injection, le moulage par injection multicomposants, le moulage par soufflage, l'extrusion ou le formage par soufflage extrusion, en pièces moulées comme des plaques, des feuilles, des fibres ou autres formes.

24. Procédé selon l'une des deux revendications précédentes, **caractérisé en ce qu'**elle est ensuite liée à d'autres matières premières telles que le verre, le bois, le métal, la céramique ou similaires, par exemple par surjection ou placage.

25. Utilisation d'une masse moulée, selon au moins l'une des revendications 1 à 21, pour la fabrication de pièces moulées telles que des plaques, des feuilles ou des fibres.

26. Utilisation selon la revendication précédente, pour du verre incassable, en tant que feuille de placage, "melded" ou adhésive, pour des vitrifications ou des systèmes de filtrage de la lumière, pour le vitrage des bâtiments, le vitrage des automobiles, le vitrage des serres, pour la couverture de surfaces utilisées en agriculture, pour des lentilles de lunettes ou le revêtement de lentilles de lunettes, pour des revêtements à effet coloré, des panneaux indicateurs et des signalisations routières, des bandes de mesure de la température, pour des capteurs solaires, des installations photovoltaïques, des emballages, pour des abat-jour ou des cabochons.

27. Utilisation selon la revendication 26 pour un affichage dépendant de la température ou l'occultation d'informations lisibles ou de pictogrammes, pour des supports de données dépendants de la température ou des panneaux d'informations lisibles des deux côtés ainsi que pour des commandes thermiques pour le transfert de données optique.
